# NEW EUROPEAN PATENT SPECIFICATION

(11) **EP 2 588 996 B2**
(45) Date of publication and mention of the opposition decision: **22.08.2018**
(45) Mention of the grant of the patent: 28.01.2015
(21) Application number: 10765602.7
(22) Date of filing: 28.09.2010
(51) Int. Cl.: G06K 19/06, G06K 19/12, B42D 15/00

(54) **MAGNETIC CODING SYSTEM WITH DEPOSIT OF MAGNETIC AREAS PRODUCED BY AT LEAST TWO MAGNETIC INK TYPES WITH DIFFERENT COERCITIVE FIELDS, DEPOSITED IN AN AT LEAST PARTIAL OVERLAY**
MAGNETISCHES CODIERSYSTEM MIT ABSCHEIDUNG VON MAGNETISCHEN BEREICHEN DURCH MINDESTENS ZWEI MAGNETTINTENTYPEN MIT VERSCHIEDENEN KOERZITIVFELDERN MITTELS ABSCHEIDUNG IN ZUMINDEST TEILWEISER ÜBERLAGERUNG
SYSTÈME DE CODAGE MAGNÉTIQUE AVEC DÉPÔT DE ZONES MAGNÉTIQUES PRODUITES PAR AU MOINS DEUX TYPES D'ENCRE MAGNÉTIQUE À CHAMPS COERCITIFS DIFFÉRENTS DÉPOSÉS EN RECOUVREMENT AU MOINS PARTIEL

(30) Priority: 01.07.2010 IT TO20100568
(43) Date of publication of application: 08.05.2013
(73) Proprietor: Fedrigoni S.p.A., 37135 Verona (IT)
(72) Inventor: LAZZERINI, Maurizio, I-20070 Cerro al Lambro (IT); MESSA, Gianluca, I-20161 Milano (IT)
(74) Representative: TBK
(86) International application number: PCT/EP2010/064323
(87) International publication number: WO 2012/000568

(56) References cited:
- WO-A1-2004/091930
- WO-A1-2009/090676

## Description

The present invention relates to a security element according to the preamble of claim 1, particularly for banknotes, security cards, passports, identity cards and the like, and to a method for manufacturing a security element according to claim 13.

### Description of prior art

For use in banknote paper, security threads are produced with magnetic areas of equal coercivity value, distanced by different thicknesses so that they have different magnetic remanences at parity of surface area (SISMA codes - EP 0 310 770 B1) or magnetic areas of equal coercivity value, distanced by blank spaces, where the single bit is of a known width and set to formulate binary codes where the magnetic bit equals 1 and the non magnetic bit (space) equals 0 (IMT coding - EP 0 407 550 B1); for the IMT thread the magnetic areas (1) or space areas (0) may also be arranged side by side.

There is a series of patent applications which also foresee the use of magnetic areas implemented with different coercitive fields positioned adjacently or superimposed to each other, wherein in case they are superimposed the surface areas are equal and congruent with each other (see, for example, PCT/IT2008/000037 and PCT/IT2009/000133). All the codes, composed of bits, are positioned distanced by spaces in which printed or de-metallised in negative or positive text is visible in transmitted and/or reflected light; or indeed the codes are positioned in a continuous form along one side of the thread (seen in the plane view) while the text is positioned on the other side (whether negative and/or positive printed and/or re-metallised).

The use of two coercitive inks, observed with multiple sensors with a 90° rotation of the magnetic field of the low coercivity value areas, delivers different codes derived from the base code (PCT/EP2008/058025).

Signals detected by SISMA, IMT or by the codes described in the patent applications cited above, always have a positive peak and a corresponding negative peak in sequence (1 positive + 1 negative for each single bit whether they have the same coercivity value and/or remanence and/or are superimposed; in the case of areas with different coercivity values positioned side by side and detected by bringing the magnetic field to saturation, the negative peak in the first area can be cancelled by the positive peak in the second area (at parity of remanence; with different remanences the peaks are imbalanced in favour of the area with the greatest remanence).

Where the remanence is equal, the sequence is again a positive peak and a negative peak except that in this case, as the negative peak of the first area is annulled due to adjacency to the positive peak of the second area, the bit length is equal to the sum of the first and second areas (the distance between the maximum peak of the positive signal in the first area and the negative peak in the signal from the second area is equal to the composed peak of the first area + the second area).

The sequences of areas occur when the thread reading is effected with a movement parallel to the thread and thus with the permanent magnetisation magnet and the reader sensor gap positioned at 90° to the thread, or when permanent magnets positioned parallel to the thread are used but with the sensors with gaps at around 45° (again with respect to the thread). The permanent magnets may be single or twin (positioned as opposites with North North - South South - North South emission; North North is the preferred form).

When using, rather, a system in which the gaps of the sensors are positioned parallel to the thread, the signals issued always have one positive and one negative peak with the distance between the maximum peak of the positive wave and the maximum peak of the negative wave being equal to the width of the area which, in these cases, is equal to the width of the thread. The dimensions of the single areas are, in these cases, of equal width (equal to the width of the thread) and of equal or unequal length along the thread axis; in the case of a superimposition of the areas, the areas produced by areas with magnetic inks of different coercivity value have the same areas and thus the distance between the maximum peak of the positive signal and the maximum peak of the negative signal remains equal. It is likewise noted that the first peak in each single area/bit may be positive or negative depending on the orientation of the magnetism emitted by the permanent magnets.

WO2004/091930 A1 discloses a security element according to the preamble of claim 1.

### Summary of the invention

It is therefore an object of the present invention to further develop a security element according to the preamble of claim 1 such that the degree of protection against forgery of the security element is increased.

The object of the present invention is achieved by a security element having the features of claim 1.

Further advantageous developments are defined in the dependent claims.

According to the present invention, the security element comprises the plurality of magnetic areas formed of at least the first magnetic material and the second magnetic material, which materials have at least one different magnetic property (for example, their coercivity values and/or remanence values may be different from each other). The first magnetic material and the second magnetic material are at least partially superimposed such that the first magnetic material is exposed at least at two sides of the second magnetic material. That is, both in the first extension direction of the security element and in the second extension direction which is perpendicular to the first extension direction, there is a change, transition, changeover, etc. from the first magnetic material to the second magnetic material. Thus, since the lateral and the transverse position and attitude of the second magnetic material superimposed on the first magnetic material are set in respect to the first magnetic material, a correct detection of said position and attitude of the second magnetic material in respect to the first magnetic material by means of a magnetic sensor is achieved by knowing them in advance, so that the level of the anti-counterfeiting ability of a coding system comprising the security element according to the invention or the degree of protection against forgery of the security element as such is increased.

Preferably, the change between the magnetic materials may be a step from the first magnetic material to the second magnetic material. For example, the first magnetic material may be provided on the second magnetic material or the first magnetic material may be provided within a recess in the second magnetic material such that there is a change in the form of a step at a transition between the first magnetic material and the second material in order to create a definite structural difference at the transition between the first and the second magnetic materials which may be suitably detectable by respective magnetic sensors.

Furthermore, a constitution of a security element may be preferred on which the magnetic materials having the same surface area (e.g. the surface area of the first magnetic material is equal to that of the second magnetic material) and/or the same dimensions of the same surface shape are arranged. Preferably, the magnetic materials may cover different (one or more) surface areas of the magnetic area provided on the security element. The magnetic materials may cover surface areas which differ in length and/or width. The surface areas of the magnetic materials may be equal in size. Here, the first magnetic material and the second magnetic material are at least partially superimposed, such superimposed surface areas of the first magnetic material and of the second magnetic material are different from each other such that the length and/or the width of the surface area of the second magnetic material may be equal or different from the length and/or the width of the surface area of the first magnetic material. Thus, it is for example possible to partially cover one or more portions of the first magnetic material by the second magnetic material in the form of various geometric surface shapes (square, rectangle, polygon, circle, etc.).

Preferably, the magnetic materials have different coercivity values, while their remanence values are identical or different. Thus, the position and the attitude of the second magnetic material partially covering the first magnetic material as well as of the first magnetic material may be suitably detected by magnetically saturating one of the magnetic materials such that the other one of the magnetic materials is still detectable by a magnetic sensor.

Preferably, the security element according to the present invention further comprises the substrate made from a paper material and/or a synthetic material as a security document, security thread, stripe or patch, in which text and/or graphic markings are defined in order to create negative and/or positive texts and/or patterns, wherein the substrate is at least partially opaque when viewed in transmitted light. Thus, since the substrate is at least partially opaque, the superimposed arrangement of the magnetic materials is not recognizable with the naked eye or is not completely detectable under a microscope. Therefore, the identification of position and attitude of the second magnetic material in respect to the first magnetic material by means of a magnetic sensor is only possible by knowing them in advance so that a high degree of protection against forgery of the security element is provided.

Preferably, the magnetic materials have different coercivity values, wherein their remanence values are changed by setting different thicknesses of the materials. Since the magnetic materials have different thicknesses, their remanence values are different; in general, it applies that the smaller the material thickness the smaller the remanence value. Thus, the position and the attitude of the second magnetic material partially covering the first magnetic material as well as of the first magnetic material may be suitably detected by bringing one of the magnetic materials into magnetic saturation (magnetic material having a coercivity value lower than the other magnetic material) so that the remanence values of the other one of the magnetic materials are still detectable by a magnetic sensor.

Preferably, the plurality of said magnetic areas are sequentially arranged on the substrate so as to be spaced apart from each other by a predetermined space. Thus, due to the sequential arrangement on the substrate of the plurality of said magnetic areas that may comprise different constitutions in partially superimposing the magnetic materials, the degree of protection against forgery of the security element is further increased. In the spaces between the magnetic areas, texts, patterns, markings, letters or the like may be inserted in positive form or in negative form in order to provide a further security feature to the security element.

Preferably, the plurality of magnetic areas which may include magnetic areas formed by the first magnetic material and/or magnetic areas formed by the second magnetic material and/or magnetic areas formed by the first and second magnetic materials having the same surface area and arranged in a superimposing manner such that their surfaces areas are congruent with each other and at least one of the at least one magnetic areas may be arranged so as to be adjacent to each other and/or to be spaced apart from each other by the predetermined space. This also renders the security element according to the present invention forgery-resistant to a high degree.

Preferably, the magnetic areas are provided by means of magnetic inks of different coercivity values and identical or different remanence values. The inks may be preferably printed on the substrate such that they are arranged in a superimposing manner, so that one of the magnetic inks is exposed at least at two sides of the other one of the magnetic inks. Thus, a simple and cost-efficient method of manufacturing the security element according to the invention is provided.

The security element may be composed by a plurality of magnetic materials arranged and/or printed on a security document, or on a security thread, stripe, or patch.

According to a further aspect of the present invention, a method for manufacturing a security element according to the invention is provided. This method comprises the steps of: printing on the substrate the first magnetic material defining the magnetic areas, the first magnetic material having a low coercivity value; saturating the first magnetic material; printing the second magnetic material, having a high coercivity value, greater than the low coercivity value of the first magnetic material, on the magnetic areas such that the second magnetic material partially covers the first magnetic material and the first magnetic material is exposed at least at two sides of the second magnetic material so that both in a first extension direction of the security element and in a second extension direction perpendicular to the first extension direction there is a change from the first magnetic material to the second magnetic material; and saturating the second magnetic material.

### Brief description of the drawings

Further features and advantages of the present invention will become apparent from the following detailed description considered in connection with the accompanying drawings, wherein:
Fig. 1 shows a plan view of a security element according to the present invention, with an upper substrate being removed, and showing sensor signals of a first detecting channel when the security element is scanned in a detection direction along the security element by means of a magnetic sensor;
Fig. 2 shows a sectional view of the security element according to the present invention as shown in Fig. 1, with the upper substrate being present;
Fig. 3 shows a plan view of the security element according to the present invention, with an upper substrate being removed, and showing sensor signals of a second detecting channel when the security element is scanned in the detection direction by means of the magnetic sensor; and
Fig. 4 shows a plan view of another security element according to the present invention, with an upper substrate being removed, and showing sensor signals of a first and a second detecting channel when the security element is scanned in a detection direction perpendicular to the security element by means of a magnetic sensor.

### Detailed description of the presently preferred embodiments

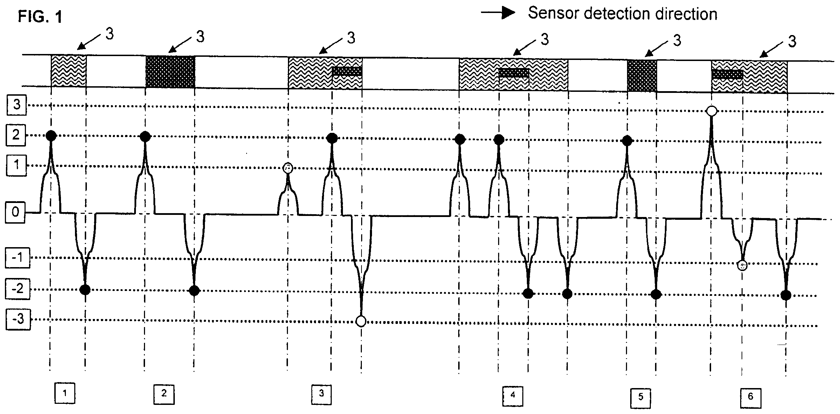

In Fig. 1 to 3, a security element according to an embodiment of the present invention is shown. The security element may be arranged on a security document, or on/as a security thread, stripe, or patch. The security element is suitable to be used for banknotes, security cards, passports, identity cards and the like.

In this embodiment, the security element comprises a lower substrate 1 and an upper substrate 2. The substrates may be made of a paper material and/or a synthetic material, in which text and/or graphic markings may be defined in order to create negative and/or positive texts and/or patterns, and they may be at least partially opaque when viewed in transmitted light. Here, no text and/or markings are provided in the substrates.

A plurality of magnetic areas 3 are arranged between the lower substrate 1 and the upper substrate 2. The magnetic areas 3 are arranged along a longitudinal direction (extending from the left- to the right-hand side in the figures) of the security element so as to be spaced apart from each other by different predetermined spaces. Thus, the magnetic areas 3 are sequentially arranged between the substrates. In other words, the magnetic areas are sequentially arranged on at least one substrate so as to be spaced apart from each other by one or more predetermined spaces. Also, a single substrate may be sufficient to be suitable to arrange the magnetic areas on said substrate.

The magnetic areas 3 are formed of a first magnetic material 4 and/or a second magnetic material 5. These magnetic materials have at least one different magnetic property.

In the figures, the first magnetic material 4 is illustrated by a light hatching whereas the second magnetic material 5 is illustrated by a dark hatching. The first magnetic material 4 and the second magnetic material 5 have at least one different magnetic property, which makes them distinguishable from each other. Here, the first magnetic material 4 is made of a magnetic material having a low coercive force (coercivity value), and the second magnetic material 5 is made of a magnetic material having a high coercive force (coercivity value). The remanence values of each of the magnetic materials are generally based on their respective material thickness; i.e. the smaller the material thickness the smaller the remanence value. Thus, the remanence values of the magnetic materials may be identical or different dependent on their material thicknesses.

For example, the magnetic areas 3 may be provided by means of magnetic inks of different coercivity values and identical or different remanence values.

According to embodiment shown in the figures, the magnetic area 3 provided with No. 1 and No. 7 is formed solely by the first magnetic material 4. The magnetic area 3 provided with No. 2 and No. 8 is formed solely by the second magnetic material 5. The remaining magnetic areas 3 provided with No. 3 to 6 and No. 9 to 12 are formed by arrangements of the first and the second magnetic materials being at least partially superimposed.

In the magnetic area provided with No. 5 and No. 11, a surface area of the first magnetic material 4 and a surface area of the second magnetic material 5 which are superimposed are equal such that they are congruent with each other.

In other words, the plurality of magnetic areas 3 provided between the substrates include magnetic areas formed by the first magnetic material 4 (see No. 1 or 7) and/or magnetic areas formed by the second magnetic material 5 (see No. 2 or 8) and/or magnetic areas formed by the first and second magnetic materials having the same surface area and arranged in a superimposing manner such that their surfaces areas are congruent with each other (see No. 5 or 11) and at least one of the at least one magnetic area is arranged so as to be adjacent to each other and/or to be spaced apart from each other by the predetermined space.

Further, in the magnetic areas provided with Nos. 3, 4, 6, 9, 10 and 12, the superimposed surface areas of the first magnetic material 4 and of the second magnetic material 5 are different from each other such that the length and the width of the surface area of the second magnetic material 5 are different from the length and the width of the surface area of the first magnetic material 4. Thus, the second magnetic material 5 partially covers the first magnetic material 4. The first magnetic material 4 is exposed at least at two sides of the second magnetic material 5 such that both in a first extension direction (here: longitudinal direction of the security element and sensor detection direction) of the security element and in a second extension direction perpendicular to the first extension direction there is a change from the first magnetic material 4 to the second magnetic material 5.

Here, the change between the magnetic materials is a step from the first magnetic material 4 to the second magnetic material 5.

Thus, by the arrangements of the first and the second magnetic materials according to the magnetic areas Nos. 3, 4, 6, 9, 10 or 12, the lateral and the transverse position and attitude of the second magnetic material 5 superimposed on (i.e. partially covering) the first magnetic material 4 are set in respect to the first magnetic material 4. Thus, a correct detection of said position and said attitude of the second material 5 in respect to the first magnetic material 4 by means of a magnetic sensor (not shown) is possible by knowing them in advance. Thus, the level of the anti-counterfeiting ability of the security element according to the invention is further increased compared to the magnetic areas Nos. 1, 2, 5, 7, 8 or 11.

Additionally and/or optionally, the magnetic materials may cover different surface areas, or the surface areas of the magnetic materials may be equal in size, and/or the magnetic materials may cover surface areas which differ in length and/or width.

In other words, Fig. 1 shows sensor values of the magnetic areas according to a first detecting channel as well as the security element (security thread) in a plan view. Here, the security element does not comprise any text or the like. The magnetic area No. 1 is realised with low coercitive ink and high remanence (sensor value 2,-2). The magnetic area No. 2 is realised with high coercitive ink and high remanence (sensor value 2,-2). The magnetic area No. 3 is realised with low coercitive ink and low remanence (sensor value 1) superimposed, off centre, with an area of high coercitive ink whose length and width are less than the low coercitive area with high remanence (sensor value 2,-3). The magnetic area No. 4 is realised with ink with low coercitive ink and high remanence (sensor value 2,-2) superimposed centrally in both directions with an area high coercitive ink whose length and width are less than the low coercitive area with high remanence (sensor value 2,-2). The magnetic area No. 5 is realised with ink with low coercitive ink and low remanence (sensor value 1,-1) which is superimposed with an area of the same dimensions, with high coercitive ink and low remanence (sensor value 1,-1), a sensor reading output of this magnetic area arrangement according to the detecting channel 1 has a value of 2,-2 which is the sum of the aforementioned areas of the value of 1 each. The magnetic area No. 6 is realised with ink with low coercitive ink and high remanence (sensor value 2,-2) superimposed, off centre, with an area of low remanence (sensor value 1,-1) and delivers a positive value of 3, which is the sum of sensor value 2 of the coercitive low + sensor value 1 of the coercitive high, and 1 negative peak of sensor value 1 generated by the area of high coercitive ink and low remanence and second negative peak, from the sensor value of 2, generated by the area of lower coercitive ink and high remanence.

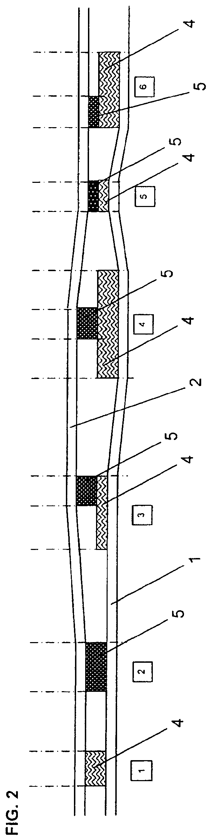

Fig. 2 presents a section view of the security element shown in Fig. 1. It is noted that, when the thickness is greater, the remanence is high while, when the thickness is reduced, the remanence is low. The positioning of the areas realised with high coercitive ink superimposed over areas of low coercitive ink is also clearly shown due to the light and dark hatchings of the magnetic materials.

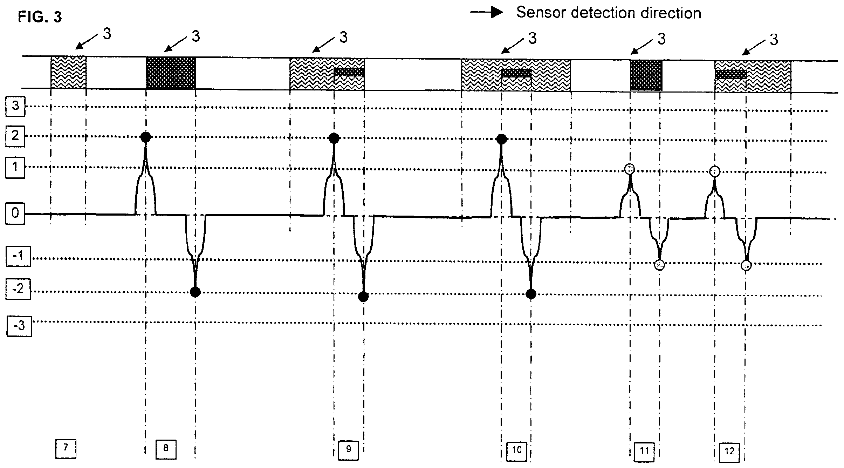

Fig. 3 shows sensor values of the magnetic areas according to a second detecting channel as well as the security element as illustrated in Fig. 1, in a plan view. The magnetic area No. 7 corresponding to No. 1 is realised with ink with low coercitive ink and high remanence (sensor value 2,-2 according to the detecting channel 1) but for the detecting channel 2, with magnetic orientation rotated through 90° so that it generates no signal according to the detecting channel 2. The sensor values of the magnetic area No. 8 corresponding to No. 2 realised with high coercitive ink and high remanence (sensor value 2,-2) are, in this case, unchanged with respect to the detecting channel 1 as it is uninfluenced by the magnetic power of the permanent magnet use to rotate magnetism through 90°. The magnetic area No. 9 corresponding to No. 3 realised with low coercitive ink and low remanence (sensor value 1 according to the detecting channel 1) is not detected due to the effect of area No. 7, while the area is superimposed, off centre in one dimension, realised with high coercitive ink, whose length and width are smaller to the one realised with low coercitive ink and high remanence, is detected with the same principle as bit No. 8 but with the sole sensor value of the high coercivity value ink which is 2,-2. The magnetic area No. 10 corresponding to No. 4 realised with low coercitive ink and high remanence (sensor value 2, -2) is not detected with the same principle as area No. 7, while the superimposed area, centred in both directions, realised with high coercitive ink whose length and width are smaller to the one realised with low coercitive ink and high remanence is detected with the same principle as bit No. 8 with a sensor value of 2,-2. The magnetic area No. 11 corresponding to No. 5 realised with low coercitive ink and low remanence (sensor value 1,-1) is not detected, wherein it is superimposed with an area of the same dimensions, with high coercitive ink and low remanence (sensor value 1,-1) which is detected due to the intensity generated by the high coercitive ink. The reading of this bit according to the detecting channel 1 has a value of 2,-2 which is the sum of the aforementioned areas of a value of 1,-1 each, while in detecting channel 2, as cited above, it is value 1,-1. The magnetic area No. 12 corresponding to No. 6 realised with low coercitive ink and high remanence (sensor value 2,-2) according to the detecting channel 1) is not detected, wherein it is superimposed, off centre in one dimension, with an area of high coercitive ink whose length and width are smaller to the one realised with low coercitive ink and high remanence delivers sensor values of +1, -1, which are generated only by the area with high coercitive ink and low remanence.

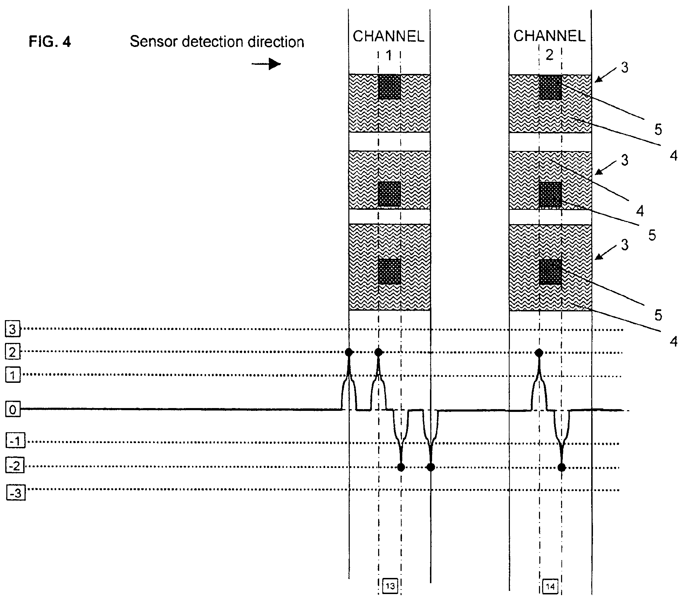

Fig. 4 presents another embodiment of possible reading or detecting magnetic areas of a security element (thread), with the use of the magnetic areas whose low coercitive ink areas are as wide as the thread, with the areas of low coercitive ink have less width (as described above). The sensor reading (detection) direction is perpendicular to the thread and means parallel to the thread make use of a suitable permanent magnet to rotate the magnetism of the low coercitive ink areas through 90°. Here, for the remaining description of this embodiment, the same applies as for the embodiment shown in Fig. 1 to 3, and only the differences between these embodiments are described below.

In this configuration, a magnetic area No. 13 provides (detecting channel 1) two positive and two negative peaks, corresponding to the different widths of the areas while in detecting channel 2 (see area No. 14 corresponding to No. 13) one positive and one negative peak are detected, corresponding to the width of the areas with high coercitive ink.

Knowledge of the width and the position of the thread with respect to the banknote in which it is inserted, and knowledge of the width of the respective areas allow perfect positioning. By aligning the areas of high coercitive ink to the left or right edge of the thread, it may be exactly established whether it is a single thread with twin characteristics, or two threads.

The security element according to the invention is particularly suited to use in the production of security threads and/or stripes and/or patches for use in banknotes. The following is a description of the production of a security thread for banknotes. It is further noted that this description is just one possibility and does not set limits to other modes for carrying out the present invention.

Security threads are generally produced on multi-section rotary presses using rotogravure techniques and/or serigraphy and/or flexography. The base material is a thin transparent plastic support such as 10 micron polyester printed with areas (in this case with section 1 of the rotary press), with non magnetic inks, on which the magnetic areas which form the codes are then deposited. The ink used for printing has a thickness ranging from 1 to 4 microns and is generally aluminium in colour so that, once coupled to a second film, de-metallised for example, it is extremely difficult to identify.

As the invention is produced with at least two magnetic inks having different magnetic properties (e.g. coercivity and/or remanence values), it is noted that not less than two sections should be used, one of which (section 2 of the rotary press) for the magnetic ink having a low coercivity value and another (section 3 of the rotary press) for magnetic ink having a high coercivity value. As these threads generally range from 1.5 mm to 5 mm in width, the rotary press used should have a print registration system between the different sections, with a precision tolerance of at least ± 0.2 of the measurement given.

For example, let us imagine the production of a thread 2 mm in width; let us then print the areas of which at section 1 with a width at least equal to the width of the thread (many threads are generally printed side by side) with a length of 20 mm, alternated with areas free of ink 20 mm in length. On top of the 20 mm areas printed with non magnetic inks, it is intended to print, again to the width of the thread or more, using section 2 of the areas with low coercitive ink to a length of 4 mm alternated with bit free areas again 4 mm in length; then 5 areas of 4 mm are established of which the 1, 3 and 5 are magnetic while 2 and 4 are not magnetic. Over these magnetic bits, using section 3, further areas of smaller width (e.g. 0.8 mm) and 2.5 mm in length equal to half the length of the areas produced with low coercivity value inks are printed. The positioning of the said second areas produced with high coercitive ink inks, considering the width, may be to the left side (a), in the centre (b) or to the right side (c) of the said prime areas and, as to the length, may be positioned at the beginning (A), in the centre (B) or at the end (C).

Thus, a series of initial areas (1-3-5) 2 mm in width and 5 mm in length whose longitudinal position has a further 5 mm of inter-space, and a second series of areas with different combinations for example centred on the width (b) but positioned differently, that is at the beginning (A on bit 1 (Fig. 1 and 2 - bit 6), at the centre (B) on bit 2 (Fig. 1 and 2 - bit 4) and at the end (C) on bit 3 (Fig. 1 and 2 - bit 3) are created. It is likewise noted that the widths and lengths should have differences of a kind to enable a correct interpretation; for a 2 mm wide thread, an indicative value of the differences could be, for the width, 3 times less than the registration tolerance of the rotary press (in the case illustrated above, the minimum difference would be 0.6 mm) while it would be at least 6 times the registration tolerance for the length and thus, in the case illustrated above, 1.2 mm less, as the rotary press has a precision of 0.2 mm.

Then, these second areas are created which may be centred on the width (and thus with 0.6 mm on one edge + 0.8 mm of bit + another 0.6 mm on the other side; each side may become 0.4 and/or 0.8 with the precision of the rotary press) and whose maximum length, printed over 5 mm bits, would be 3.8 mm, leaving 1.2 mm at the end of case (A) which could become 1 mm with rotary press tolerance, 0.6 mm each side in case (B) which could be from 0.4 to 0.8 mm and 1.2 mm at the beginning of case (C) which could become 1 mm.

It is likewise noted that after printing with section 2 of the rotary press, there is then a system which magnetises the said areas printed with low coercitive ink with a high coercitive permanent magnet, which bring the magnetic signal to saturation so that a series of sensors produced with inductive or resistant magnetic detector heads detect their intensity. Another similar device is fitted after section 3 which prints areas with inks with high coercitive ink, again bringing the said areas to saturation and detecting it with inductive or resistant sensors. By a careful analysis of the signals after section 3 compared with the signals after section 2, a value of the printing registration of the areas superimposed is obtained.

It is also noted that each single area, whether of low or high coercivity value, can have equal and/or different magnetic remanences produced both with higher volume quantities (greater thickness at the same dimensions) and with a significant difference of percentage of ferrite content in the ink.

Areas produced in such a way may be inserted in codings which foresee other areas composed of single magnetic ink type (coercivity value) and/or with other areas whose areas are perfectly identical and composed of inks with low coercitive value and inks with high coercitive value.

Further specification should be effected with respect to the term "areas" used to indicate equal surfaces, or at least those within the normal tolerances of print settings. The areas indicated in the present invention, realised with areas whose surfaces differ, printed in overlay, may have different thicknesses, and thus volumes, also within areas of equal surface. Different volumes thus give a different magnetic remanence within the same surface area.

In conclusion, the present invention is directed to magnetic areas realised with superimposed magnetic areas, one of which may have less surface area to the other so as to be detected, and whose volumes may be equal or different and whose coercivity value, of the said superimposed areas, may be different in order to obtain, for example, areas with an equal coercivity value, equal area and equal remanence or different remanence superimposed on areas with a coercivity value equal in the overlay yet differing from the coercivity value of the first area substrate, whose areas may be equal yet greater or less than that superimposed and equal or different remanence among them and with the areas superimposed.

The whole may be covered with an area of metallic colour to cover the magnetic bits. This first polyester layer may be coupled in a longitudinal and transverse register with a further polyester with metallic characteristics (aluminium deposited under vacuum), which may have penetrating and/or non penetrating holes in the metallic layer, bearing texts or, in any way, graphic marks. Said holes may be sufficient to permit interpretation of the texts or graphic marks, when observed with transmitted light.

It is likewise noted that the areas can be realised on aluminium type metallic areas deposited under vacuum or on other materials intended to optically obscure the code.

One or both polyester films may have materials which bring about colour shift and/or fluorescent and/or changing effects.

Threads produced as indicated above and thus with codes which have at least one bit produced with different areas and coercivity value, inserted into banknote paper, with either the window or the total embedded techniques, should be magnetised with permanent magnets of elevated power bring the magnetic areas to saturation to enable their detection in different modes, for example:
- When the banknotes are transported perpendicular to the thread, the reading and decoding is effected as indicated above, a series of areas which identify at least three codes at least one of which presents a bit with two inbound positive peaks and/or outbound (thus negative peaks) is provided. The distance between the two peaks corresponds to the attitude of positioning between the two magnetic areas.
- When the banknotes are transported parallel to the thread, the reading and decoding is effected as indicated above and also in this case a series of codes and areas as shown above is provided.
- A further reading characteristic which can be developed for banknotes which have codes formed by areas realised with superimposed areas, of a different coercivity value and whose surface width is inferior one from the other, consists of identification with two sensors in sequence, of the different width of the two magnetic areas and the positioning of one relative to the other. To execute this reading type, the positioning-distance between the two sensors should be known. Inserted between the two sensors, there should be a magnet which rotates the magnetism of the areas realised with low coercitive inks through 90°, so that the 1^{st} sensor detects the double inbound and outbound signals due to the larger areas (low coercivity value and as wide as the thread) and to the narrower areas (high coercivity value and narrower than the thread). The magnet causing magnetical rotation of the areas with low coercitive ink, impedes detection thereof at the second sensor which will thus detect only the areas of high coercitive ink that corresponds to the narrower areas. Analysing the signals from the 1^{st} and 2^{nd} sensors, their width and positioning, it will be possible to identify, at low cost, threads produced with magnetic areas produced with different coercivity value and surface areas.

According to the present invention, a security document according to one embodiment is shown having a paper and/or a synthetic support like a banknote on which, or indeed within which, there is a thread and/or stripe and/or patch type security system with magnetic codes produced with magnetic areas characterised by magnetic inks of a different coercivity value and which have at least one bit per code produced with overlay of the said areas at least one of which has surface and dimensions differing by length or width or both. The invention is also directed to a process to obtain the security element (thread or stripe or patch) and to a system of pre-magnetisation with permanent magnets which bring to saturation some of the magnetic areas which are detectable by inductive or resistant sensors.

The present invention also covers a type of coding obtaining at least 10 codes inserted one into the other, which are detected as follows:
1. 1^{st} code - magnetising all the areas to saturation delivers the 1^{st} code formed by magnetic areas, alternated by spaces, of which at least one present two positive or negative peaks, in succession; the said peaks may also be two positives and two negatives - Fig. 1 trigger at 0.5 (bits with red (sensor value 2,-2), blue (sensor value 1,-1) and yellow spheres (sensor value 3,-3))
2. 2^{nd} code - positioning the trigger at 1.5 the bits with red (sensor value 2,-2) and yellow sphere icons (sensor value 3,-3) are detected - Fig. 1
3. 3^{rd} code - positioning the trigger at 2.5 the yellow bit (sensor value 3,-3) is detected - Fig. 1
4. 4^{th} code - positioning said areas/bits in a different mode along the length. Thus, spaces with different lengths can form binary or more performing codes giving value "0" to the short space and "1" to the long space; intermediate spaces will provide value "2" and so on. Fig. 1 trigger at 0.5 (bits with red (sensor value 2,-2), blue (sensor value 1,-1) and yellow spheres (sensor value 3,-3))
5. 5^{th} code - the spaces detected with trigger at 1.5 differ (because the number of areas differs) from those with the trigger at 0.5 - Fig. 1
6. 6^{th} code - the spaces detected with trigger at 2.5 differ (because the number of areas differs) from those with the trigger at 0.5 and 1.5 - Fig. 1
7. 7^{th} code - using a permanent magnet with a coercitive value positioned between the coercitivities of the inks used and oriented at 90° with respect to the first magnetisation, annuls detection of the areas realised with low coercitive ink leaving only the areas realised with high coercitive ink with a lower number of areas - Fig. 3 trigger at 0.5
8. 8^{th} code - positioning the trigger at 1.5 the areas with red sphere icons are detected - Fig. 3
9. 9^{th} code - the spaces detected with trigger at 0.5 - Fig. 3
10.10^{th} code - the spaces detected with trigger at 1.5 - Fig. 3

## Claims

1. A security element, particularly for banknotes, security cards, passports, identity cards and the like, comprising a plurality of magnetic areas (3) formed of at least a first and a second magnetic material (4, 5) having at least one different magnetic property, the second magnetic material (5) partially covering the first magnetic material (4), wherein
the first magnetic material (4) is exposed at least at two sides of the second magnetic material (5) such that in a first extension direction of the security element there is a change from the first magnetic material (4) to the second magnetic material (5),
**characterized in that**
a change from the first magnetic material (4) to the second material (5) also exists in a second extension direction of the security element, which second direction is perpendicular to the first extension direction, and
the security element further comprises at least one substrate on which the magnetic areas (3) are sequentially arranged so as to be spaced apart from each other by one or more predetermined spaces.

2. The security element according to claim 1, **characterized in that** the change between the magnetic materials (4, 5) is a step from the first magnetic material (4) to the second magnetic material (5).

3. The security element according to claim 1 or 2, **characterized in that** the magnetic materials (4, 5) cover different surface areas.

4. The security element according to any one of the preceding claims, **characterized in that** the magnetic materials (4, 5) cover surface areas which differ in length and/or width.

5. The security element according to claim 1 or 2, **characterized in that** the surface areas of the magnetic materials (4, 5) are equal in size.

6. The security element according to any one of the preceding claims, **characterized in that** the magnetic materials (4, 5) have different coercivity values, wherein their remanence values are identical or different.

7. The security element according to any one of the preceding claims, **characterized by** further comprising the substrate (1, 2) made from a paper material and/or a synthetic material as a security document, or a security thread, stripe or patch, in which text and/or graphic markings are defined in order to create negative and/or positive texts and/or patterns, wherein the substrate (1, 2) is at least partially opaque when viewed in transmitted light.

8. The security element according to any one of the preceding claims, **characterized in that** the magnetic materials (4, 5) have different coercivity values, wherein their remanence values are changed by setting different thicknesses of the materials (4, 5).

9. The security element according to claim 8, **characterized in that** the plurality of said magnetic areas (3) are sequentially arranged on the substrate (1, 2) so as to be spaced apart from each other by a predetermined space.

10. The security element according to claim 9, **characterized in that** a plurality of magnetic areas (3) which include magnetic areas (3) formed by the first magnetic material (4) and/or magnetic areas (3) formed by the second magnetic material (5) and/or magnetic areas (3) formed by the first and second magnetic materials (4, 5) having the same surface area and arranged in a superimposing manner such that their surfaces areas are congruent with each other and at least one of the at least one magnetic area (3) is arranged so as to be adjacent to each other and/or to be spaced apart from each other by the predetermined space.

11. The security element according to any one of the preceding claims, **characterized in that** the magnetic areas (3) are provided by means of magnetic inks of different coercivity values and identical or different remanence values.

12. The security element according to any one of the preceding claims, **characterized in that** the security element is composed by magnetic materials (4, 5) realized according to claim 1 arranged and/or printed on a security document, or on a security thread, stripe, or patch.

13. A method for manufacturing a security element according to any of claims 7 to 12, comprising the steps of:
printing the first magnetic material (4) defining the magnetic areas (3) on the substrate, the first magnetic material (4) having a low coercivity value;
saturating the first magnetic material (4);
printing the second magnetic material (5) having a high coercivity value greater than the low coercivity value of the first magnetic material (4) on the magnetic areas (3) such that the second magnetic material (5) partially covers the first magnetic material (4) and the first magnetic material (4) is exposed at least at two sides of the second magnetic material (5) so that both in a first extension direction of the security element and in a second extension direction perpendicular to the first extension direction there is a change from the first magnetic material (4) to the second magnetic material (5); and
saturating the second magnetic material (5).

## Patentansprüche

1. Sicherheitselement, insbesondere für Banknoten, Sicherheitskarten, Reisepässe, Personalausweise und dergleichen, mit einer Vielzahl von magnetischen Bereichen (3), die aus zumindest einem ersten magnetischen Material und einem zweiten magnetischen Material (4, 5) ausgebildet sind, die zumindest eine unterschiedliche magnetische Eigenschaft haben, wobei das zweite magnetische Material (5) teilweise das erste magnetische Material (4) abdeckt, wobei
das erste magnetische Material (4) an zumindest zwei Seiten des zweiten magnetischen Materials (5) derart freigelegt ist, dass es in einer ersten Erstreckungsrichtung des Sicherheitselements eine Änderung von dem ersten magnetischen Material (4) zu dem zweiten magnetischen Material (5) gibt,
**dadurch gekennzeichnet, dass**
eine Änderung von dem ersten magnetischen Material (4) zu dem zweiten Material (5) auch in einer zweiten Erstreckungsrichtung des Sicherheitselements vorhanden ist, wobei die zweite Richtung senkrecht zu der ersten Erstreckungsrichtung ist, und
das Sicherheitselement des Weiteren zumindest ein Substrat aufweist, auf dem die magnetischen Bereiche (3) aufeinanderfolgend angeordnet sind, um voneinander um einen oder mehrere vorbestimmte Zwischenräume beabstandet zu sein.

2. Sicherheitselement nach Anspruch 1, **dadurch gekennzeichnet, dass** die Änderung zwischen den magnetischen Materialen (4, 5) eine Stufe von dem ersten magnetischen Material (4) zu dem zweiten magnetischen Material (5) ist.

3. Sicherheitselement nach Anspruch 1 oder 2, **dadurch gekennzeichnet, dass** die magnetischen Materialien (4, 5) unterschiedliche Flächenbereiche abdecken.

4. Sicherheitselement nach einem der vorangegangenen Ansprüche, **dadurch gekennzeichnet, dass** die magnetischen Materialien (4, 5) Flächenbereiche abdecken, die sich in Länge und/oder Breite unterscheiden.

5. Sicherheitselement nach Anspruch 1 oder 2, **dadurch gekennzeichnet, dass** die Flächenbereiche der magnetischen Materialien (4, 5) gleich groß sind.

6. Sicherheitselement nach einem der vorangegangenen Ansprüche, **dadurch gekennzeichnet, dass** die magnetischen Materialien (4, 5) unterschiedliche Koerzitivfeldstärkewerte haben, wobei deren Remanenzwerte identisch oder unterschiedlich sind.

7. Sicherheitselement nach einem der vorangegangenen Ansprüche, **dadurch gekennzeichnet, dass** des Weiteren das Substrat (1, 2) aufweist, das aus einem Papiermaterial und/oder einem synthetischen Material als ein Sicherheitsdokument oder ein Sicherheitsfaden, -streifen oder -ausschnitt hergestellt ist, in dem Text und/oder graphische Kennzeichen definiert sind, um Negativ- und/oder Positivtexte und/oder Muster zu erzeugen, wobei das Substrat (1, 2) zumindest teilweise opak ist, wenn es im Durchlicht betrachtet wird.

8. Sicherheitselement nach einem der vorangegangenen Ansprüche, **dadurch gekennzeichnet, dass** die magnetischen Materialien (4, 5) unterschiedliche Koerzitivfeldstärkewerte haben, wobei deren Remanenzwerte durch Festlegen von unterschiedlichen Dicken der Materialien (4, 5) geändert werden.

9. Sicherheitselement nach Anspruch 8, **dadurch gekennzeichnet, dass** die Vielzahl der magnetischen Bereiche (3) aufeinanderfolgend auf dem Substrat (1, 2) angeordnet sind, um voneinander um einen vorbestimmten Zwischenraum beabstandet zu sein.

10. Sicherheitselement nach Anspruch 9, **dadurch gekennzeichnet, dass** eine Vielzahl von magnetischen Bereichen (3), die magnetische Bereiche (3), die durch das erste magnetische Material (4) ausgebildet sind, und/oder magnetische Bereiche (3), die durch das zweite magnetische Material (5) ausgebildet sind, und/oder magnetische Bereiche (3) aufweisen, die durch das erste magnetische Material und das zweite magnetische Material (4, 5) ausgebildet sind, denselben Flächenbereich haben und in einer überlagernden Weise derart angeordnet ist, dass deren Flächenbereiche zueinander kongruent sind und zumindest einer des zumindest einen magnetischen Bereichs (3) angeordnet ist, um zueinander angrenzend zu sein und/oder um voneinander um einen vorbestimmten Zwischenraum beabstandet zu sein.

11. Sicherheitselement nach einem der vorangegangenen Ansprüche, **dadurch gekennzeichnet, dass** die magnetischen Bereiche (3) mittels magnetischen Tinten mit unterschiedlichen Koerzitivfeldstärkewerten und identischen oder unterschiedlichen Remanenzwerten vorgesehen sind.

12. Sicherheitselement nach einem der vorangegangenen Ansprüche, **dadurch gekennzeichnet, dass** das Sicherheitselement durch magnetische Materialien (4, 5), die gemäß Anspruch 1 realisiert sind, gebildet sind, die auf einem Sicherheitsdokument oder auf einem Sicherheitsfaden, -streifen oder -ausschnitt angeordnet und/oder gedruckt sind.

13. Verfahren zum Herstellen eines Sicherheitselements nach einem der Ansprüche 7 bis 12, das die Schritte aufweist:
Drucken des ersten magnetischen Materials (4), das die magnetischen Bereiche (3) definiert, auf das Substrat, wobei das erste magnetische Material (4) einen niedrigen Koerzitivfeldstärkewert hat;
Sättigen des ersten magnetischen Materials (4);
Drucken des zweiten magnetischen Materials (5) mit einem hohen Koerzitivfeldstärkewert, der größer ist als der niedrige Koerzitivfeldstärkewert des ersten magnetischen Materials (4), auf die magnetischen Bereiche (3), derart, dass das zweite magnetische Material (5) teilweise das erste magnetische Material (4) abdeckt und das erste magnetische Material (4) zumindest an zwei Seiten des zweiten magnetischen Materials (5) freigelegt ist, sodass es sowohl in einer ersten Erstreckungsrichtung des Sicherheitselements als auch in einer zweiten Erstreckungsrichtung senkrecht zu der ersten Erstreckungsrichtung eine Änderung von dem ersten magnetischen Material (4) zu dem zweiten magnetischen Material (5) gibt; und
Sättigen des zweiten magnetischen Materials (5).

## Revendications

1. Élément de sécurité, particulièrement pour des billets de banque, des cartes de sécurité, des passeports, des cartes d'identité et des objets similaires, comprenant une pluralité de zone magnétiques (3) constituée d'au moins un premier et un deuxième matériau magnétique (4, 5) ayant au moins une propriété magnétique différente, le deuxième matériau magnétique (5) recouvrant partiellement le premier matériau magnétique (4), dans lequel
le premier matériau magnétique (4) est exposé d'au moins deux côtés du deuxième matériau magnétique (5) de sorte que, dans un premier sens d'extension de l'élément de sécurité, il y ait un changement du premier matériau magnétique (4) au deuxième matériau magnétique (5),
**caractérisé en ce que**
un changement du premier matériau magnétique (4) au deuxième matériau magnétique (5) existe également dans un deuxième sens d'extension de l'élément de sécurité, le deuxième sens d'extension étant perpendiculaire au premier sens d'extension, et
l'élément de sécurité comprend en outre au moins un substrat sur lequel les zones magnétiques (3) sont agencées séquentiellement de manière à être espacées l'une de l'autre d'un ou plusieurs espaces prédéterminés.

2. Élément de sécurité selon la revendication 1, **caractérisé en ce que** le changement entre les matériaux magnétiques (4, 5) est un pas du premier matériau magnétique (4) au deuxième matériau magnétique (5).

3. Élément de sécurité selon la revendication 1 ou 2, **caractérisé en ce que** les matériaux magnétiques (4, 5) couvrent différentes aires de surface.

4. Élément de sécurité selon l'une quelconque des revendications précédentes, **caractérisé en ce que** les matériaux magnétiques (4, 5) couvrent des aires de surface de longueurs différentes et/ou de largeurs différentes.

5. Élément de sécurité selon la revendication 1 ou 2, **caractérisé en ce que** les aires de surface des matériaux magnétiques (4, 5) sont de tailles égales.

6. Élément de sécurité selon l'une quelconque des revendications précédentes, **caractérisé en ce que** les matériaux magnétiques (4, 5) ont des valeurs de coercivité différentes, dans lequel leurs valeurs de rémanence sont identiques ou différentes.

7. Élément de sécurité selon l'une quelconque des revendications précédentes, **caractérisé en ce qu'**il comprend en outre le substrat (1, 2) constitué d'un matériau en papier et/ou d'un matériau synthétique en tant que document de sécurité, ou d'un filet, d'une bande ou d'une pièce de sécurité, dans lequel des marquages de texte et/ou graphiques sont définis afin de créer des textes et/ou des motifs négatifs et/ou positifs, dans lequel le substrat (1, 2) est au moins partiellement opaque lorsqu'il est regardé à une lumière transmise.

8. Élément de sécurité selon l'une quelconque des revendications précédentes, **caractérisé en ce que** les matériaux magnétiques (4, 5) ont des valeurs de coercivité différentes, dans lequel leurs valeurs de rémanence sont changées en réglant différentes épaisseurs des matériaux (4, 5) .

9. Élément de sécurité selon la revendication 8, **caractérisé en ce que** la pluralité desdites zones magnétiques (3) sont agencées séquentiellement sur le substrat (1, 2) de manière à être espacées l'une de l'autre d'un espace prédéterminé.

10. Élément de sécurité selon la revendication 9, **caractérisé en ce qu'**une pluralité de zones magnétiques (3) qui comprennent des zones magnétiques (3) constituées du premier matériau magnétique (4) et/ou de zones magnétiques (3) constituées du deuxième matériau magnétique (5) et/ou de zones magnétiques (3) constituées des premier et deuxième matériaux magnétiques (4, 5) ont la même aire de surface et sont agencées de manière superposée de sorte que leurs aires de surface soient congruentes l'une à l'autre et au moins l'une de l'au moins une zone magnétique (3) est agencée de manière à être adjacentes l'une à l'autre et/ou à être espacées l'une de l'autre de l'espace prédéterminé.

11. Élément de sécurité selon l'une quelconque des revendications précédentes, **caractérisé en ce que** les zones magnétiques (3) sont fournies au moyen d'encres magnétiques de différentes valeurs de coercivité et de valeurs de rémanence identiques ou différentes.

12. Élément de sécurité selon l'une quelconque des revendications précédentes, **caractérisé en ce que** l'élément de sécurité se compose de matériaux magnétiques (4, 5) réalisés selon la revendication 1, agencés et/ou imprimés sur un document de sécurité ou sur un filet, une bande ou une pièce de sécurité.

13. Procédé pour fabriquer un élément de sécurité selon l'une quelconque des revendications 7 à 12, comprenant les étapes de :
l'impression du premier matériau magnétique (4) en définissant les zones magnétiques (3) sur le substrat, le premier matériau magnétique (4) ayant une faible valeur de coercivité ;
la saturation du premier matériau magnétique (4) ;
l'impression du deuxième matériau magnétique (5) ayant une grande valeur de coercivité supérieure à la faible valeur de coercivité du premier matériau magnétique (4) sur les zones magnétiques (3) de sorte que le deuxième matériau magnétique (5) recouvre partiellement le premier matériau magnétique (4) et le premier matériau magnétique (4) est exposé d'au moins deux côtés du deuxième matériau magnétique (5) de sorte que, à la fois dans un premier sens d'extension de l'élément de sécurité et dans un deuxième sens d'extension perpendiculaire au premier sens d'extension, il y ait un changement du premier matériau magnétique (4) au deuxième matériau magnétique (5) ; et
la saturation du deuxième matériau magnétique (5).
